(19) Europäisches Patentamt
European Patent Office
Office européen des brevets

(11) **EP 4 007 335 B1**

(12) **FASCICULE DE BREVET EUROPEEN**

(45) Date de publication et mention
de la délivrance du brevet:
**24.04.2024   Bulletin 2024/17**

(51) Classification Internationale des Brevets (IPC):
**H04W 16/14** *(2009.01)*      **H04W 72/54** *(2023.01)*
*H04W 4/02* *(2018.01)*      *H04W 24/02* *(2009.01)*
*H04W 48/16* *(2009.01)*

(21) Numéro de dépôt: **21210537.3**

(22) Date de dépôt: **25.11.2021**

(52) Classification Coopérative des Brevets (CPC):
**H04W 16/14; H04W 72/54;** H04W 4/02;
H04W 24/02; H04W 48/16

(54) **PROCÉDÉ DE SELECTION D'UN CANAL DANS UN DISPOSITIF POINT D'ACCÈS SANS FIL D'UN RÉSEAU DE COMMUNICATION ET DISPOSITIF POINT D'ACCÈS SANS FIL ASSOCIÉ**

VERFAHREN ZUR AUSWAHL EINES KANALS IN EINEM DRAHTLOSEN ACCESSPOINT-GERÄT EINES KOMMUNIKATIONSNETZES UND ENTSPRECHENDES DRAHTLOSES ACCESSPOINT-GERÄT

METHOD FOR SELECTING A CHANNEL IN A WIRELESS ACCESS POINT DEVICE OF A COMMUNICATION NETWORK AND ASSOCIATED WIRELESS ACCESS POINT DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2020   FR 2012397**

(43) Date de publication de la demande:
**01.06.2022   Bulletin 2022/22**

(73) Titulaire: **Sagemcom Broadband SAS**
**92270 Bois-Colombes (FR)**

(72) Inventeurs:
• **MAPAR, Samira**
**92500 Rueil Malmaison (FR)**
• **CONTAL, Serge**
**92500 Rueil Malmaison (FR)**
• **BEN HAMIDA, Elyes**
**92500 Rueil Malmaison (FR)**

(74) Mandataire: **Cabinet Le Guen Maillet**
**3, impasse de la Vigie**
**CS 71840**
**35418 Saint-Malo Cedex (FR)**

(56) Documents cités:
**WO-A1-2012/003566      US-A1- 2014 038 655**
**US-A1- 2020 296 659**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE TECHNIQUE

La présente invention se rapporte à la sélection et l'allocation de canaux de communication dans un ou plusieurs réseaux de communication sans fil, notamment dans un environnement radioélectrique réglementé. L'invention concerne plus particulièrement la sélection d'un canal parmi une pluralité de canaux dont certains sont susceptibles d'être utilisés par un équipement de type radar.

ETAT DE LA TECHNIQUE ANTERIEURE

La mise en place de réseaux locaux sans-fil WLAN (sigle de l'anglais « *Wireless Local Area Network* ») offre une grande flexibilité aux utilisateurs de dispositifs de communication nomades, tels que des ordinateurs, des tablettes, des téléphones intelligents ou *smartphones,* des objets connectés etc. De tels réseaux WLAN sont par exemple établis par des dispositifs points d'accès sans fil intégrés dans des passerelles résidentielles RGW (du sigle anglais « *Residential Gateway* ») mis à disposition par des opérateurs de télécommunication, mais aussi via des dispositifs d'extension de la portée d'un tel réseau, ou encore via des dispositifs connectés au réseau, tels qu'un décodeur de télévision numérique, par exemple. Ainsi de nombreux dispositifs points d'accès sans fil peuvent coexister dans un même réseau de communication local comprenant en outre d'éventuels points de connexion filaires.

Des bandes fréquentielles (ou canaux) dans la bande dite « 5 GHz » sont partagées entre des utilisations pour des communications sans fil dans des réseaux de type WLAN et des utilisations prioritaires telles que l'usage de radars météorologiques, de radars d'aviation civile ou encore de radars militaires.

Une fonction dite « DFS » du sigle anglais « Dynamic Frequency Sélection » et qui signifie « sélection dynamique de fréquence » a été introduite à cet effet dans la norme IEEE802.11h ainsi que dans la norme ETSI BRAN HIPERLAN/2 qui réglementent toutes deux les applications de communication sans fil qui leur sont respectivement compatibles. Cette fonction de sélection dynamique de fréquence (DFS) fait donc référence à des mécanismes permettant aux périphériques sans licence, en particulier ceux fonctionnant à l'extérieur, de partager les bandes de fréquences de la bande 5 GHz attribuées aux systèmes de type radar, sans causer de brouillage à ces radars. Ainsi, lorsqu'un dispositif de communication sans fil, tel qu'un dispositif point d'accès sans fil d'un réseau de communication est configuré pour utiliser un canal susceptible d'être utilisé pour une application radar prioritaire, communément appelé « canal DFS », le dispositif doit s'assurer de la disponibilité du canal. En d'autres termes, le dispositif doit rechercher dans le canal la présence de certains signaux caractéristiques représentatifs du fonctionnement d'un radar. La durée de la recherche opérée préalablement à l'utilisation d'un canal dépend du type de canal et de la méthode d'écoute (scrutation). Lorsque l'écoute est de type continue, elle doit durer de 1 à 10 minutes au moins, selon la règlementation et la fréquence du canal. Si l'écoute est opérée sur un canal tout en opérant une transmission sur un autre canal, elle doit durer entre 6 minutes et 1 heure, selon le cas. Selon la règlementation encore, lorsque la fonction DFS est activée dans un dispositif point d'accès sans fil, celui-ci surveillera la fréquence qu'il utilise pour détecter des signaux radar. Si des signaux radar sont détectés sur un canal en cours d'utilisation, il devra quitter ce canal et basculer sans délai sur un autre canal. De plus, le canal sur lequel les radars sont détectés ne pourra pas être utilisé pendant un temps prédéterminé (par exemple 30 minutes).

Durant l'écoute, l'interface radio est donc indisponible ou offre des performances conséquemment réduites.

Pour répondre au besoin de détection de radars, certains fournisseurs d'équipements de communication sans fil dotent les interfaces radio d'un second récepteur dédié à une écoute des canaux DFS pour détecter des signaux caractéristiques de l'usage d'un radar. Cette solution apporte toutefois de la complexité et entraîne un surcoût important.

Une autre solution existe selon laquelle un serveur de gestion d'un réseau de communication centralise des informations à partir de nombreux dispositifs points d'accès sans fil et sélectionne les canaux à utiliser par les différents dispositifs points d'accès.

La situation peut toutefois être encore améliorée.

Le document US 2020/0296659 divulgue une méthode permettant à un dispositif WLAN de sélectionner un canal de sélection dynamique de fréquence (DFS) opérationnel qui minimise la probabilité d'interférence radar en utilisant des informations d'aide. Le document US 2014/0038655 décrit diverses technologies permettant de fournir un retour d'informations sur l'utilisation du spectre à partir d'un dispositif d'espace blanc, whitespace device. Le document WO 2012/003566 propose une structure de base de données à deux niveaux à utiliser par les dispositifs TVBD sans licence fonctionnant dans l'espace blanc TV, cette base de données à deux niveaux comprenant une base de données centrale et des bases de données locales.

EXPOSE DE L'INVENTION

L'invention a pour but de proposer une méthode optimisée de sélection d'un canal DFS dans un dispositif point d'accès sans fil d'un réseau de communication.

A cet effet, il est proposé un procédé de sélection d'un canal de communication sans-fil, entre un dispositif point d'accès sans-fil d'un réseau de communication et une station, le procédé étant exécuté dans le dispositif point d'accès sans-fil dudit réseau de communication (1), le procédé comprenant :

- obtenir localement, à partir dudit dispositif point d'accès sans fil, au moins une première information, représentative d'un premier environnement électromagnétique à portée dudit dispositif point d'accès sans-fil, et,
- en l'absence de détection d'un signal radar pour ledit canal, obtenir localement une information représentative d'un changement de statut d'occupation pour ledit canal, au sens de la détection d'un radar, puis,
- obtenir, depuis un serveur distant, au moins une seconde information, représentative d'un second environnement électromagnétique autour dudit dispositif point d'accès sans fil, puis,
- sélectionner ledit canal de communication grâce à au moins ladite première information représentative dudit premier environnement, ladite information représentative dudit changement de statut d'occupation, et ladite au moins une seconde information représentative dudit second environnement, et,
- configurer une interface radio dudit dispositif point d'accès sans fil pour opérer des communications sans fil avec ladite station dans le canal sélectionné.

Ainsi, la sélection du canal n'est ni uniquement centralisée, ni uniquement basée sur des informations locales mesurées et/ou déterminées par le dispositif point d'accès. Un premier avantage réside dans le fait qu'il est possible de disposer d'informations qui ne sont pas accessibles directement par le dispositif point d'accès sans fil autrement qu'en les recevant d'un dispositif tiers. Un second avantage réside dans le fait qu'en cas de grande variabilité des caractéristiques propres à l'environnement à portée électromagnétique du dispositif point d'accès, il peut être tenu compte de modifications de l'environnement local au dispositif point d'accès sans fil, quand bien même un serveur centralisé ne disposerait pas de ces informations. Par exemple lorsqu'un canal vient tout juste de devenir disponible et qu'il est le seul et unique canal utilisable.

Un troisième avantage réside dans le fait qu'il est possible de tenir compte d'informations structurées faisant suite à une ou plusieurs phases de collecte, telles que par exemple des caractéristiques d'un environnement électromagnétique combinées (superposées) à une carte maillée, telle qu'une carte sous la forme de tuiles de carte dont la résolution est ajustable.

Le procédé selon l'invention peut également comporter les caractéristiques suivantes, considérées seules ou en combinaison :

- Ladite première information est représentative d'une bande fréquentielle et la seconde information est représentative d'au moins un niveau de disponibilité d'un canal de communication sans fil dans ladite bande fréquentielle. Ainsi, il est possible de sélectionner par exemple un canal DFS dans la bande 5 GHz à partir d'informations centralisées par un serveur central et d'informations définies ou mesurées localement.

- La seconde information est comprise dans une liste d'informations relatives à différents canaux de communication et étant chacune représentative d'au moins un niveau de disponibilité d'un canal de communication sans fil parmi plusieurs canaux de communication sans fil dans ladite bande fréquentielle. Avantageusement, un dispositif point d'accès sans fil peut ainsi disposer d'une liste de canaux DFS susceptibles d'être utilisés ainsi que d'un indice de disponibilité lui permettant d'envisager d'allouer chacun de ces canaux selon un ordre de priorité. Par exemple, le canal le plus probablement disponible sera alloué ou testé le premier. En cas d'occupation de ce canal par un radar ou une quelconque application prioritaire, c'est le canal classé en seconde position en termes de probabilité de disponibilité qui sera alors considéré et potentiellement alloué, et ainsi de suite.

- L'obtention de la seconde information depuis le serveur distant est opérée suite à l'émission, par le dispositif point d'accès sans fil, vers le serveur distant, d'une requête émise en vue d'obtenir au moins cette seconde information. Ainsi, avantageusement, les informations disponibles à partir du serveur distant centralisant des informations ne sont délivrées au dispositif point d'accès sans fil que si ce dernier le juge utile, ce qui a pour effet de préserver la bande passante entre le serveur distant et le dispositif point d'accès sans fil, et donc plus largement la bande passante dans l'ensemble du réseau de communication qui comprend ces dispositifs.

- Le second environnement est défini en référence à une ou plusieurs informations de localisation du dispositif point d'accès sans fil dans un référentiel cartographique partagé entre le dispositif point d'accès sans fil et le serveur distant. Avantageusement, il est ainsi possible de superposer (référencer ou indexer) les informations relatives à des environnements électromagnétiques par rapport à des points géographiques de sorte à établir une cartographie électromagnétique et pouvoir déterminer la présence d'un élément qui ne peut être perçu directement par un dispositif point d'accès sans fil, car n'étant pas à sa portée en termes de réception électromagnétique.

- Au moins un canal de la bande fréquentielle est défini comme étant attribuable prioritairement pour une application autre que des communications sans fil, notamment pour opérer une détection au moyen d'un équipement de type radar. Avantageusement, il est ainsi possible de gérer des contraintes imposées par la règlementation relative aux canaux DFS ou encore tout autre contrainte d'utilisation de canaux d'une bande fréquentielle rendant l'utilisation d'un canal d'une bande fréquentielle prioritaire pour une application autre que des communications sans fil, par exemple des communications dans un cadre résidentiel entre des équipements électroniques au sein d'un foyer ou d'un bâtiment.

- Le procédé comprend au moins une étape de collecte d'informations représentatives d'environnements autour d'une pluralité de dispositifs points d'accès sans fil comprenant le dispositif point d'accès sans fil et la transmission de ces informations vers le serveur central. Avantageusement, le serveur central dispose alors d'informations mesurées et relevées directement par un dispositif point d'accès sans fil, ce qui permet, lorsqu'un grand nombre de dispositifs points d'accès sans fil opèrent de même, d'optimiser la centralisation et la mutualisation d'informations relatives à l'occupation des canaux ou d'informations connexes à ces informations pour une zone géographique étendue.

- Le procédé comprend une pluralité d'étapes de collecte d'informations représentatives d'environnements autour d'une pluralité de dispositifs points d'accès sans fil comprenant ledit dispositif point d'accès sans fil et, au moins une partie des étapes de collecte sont antérieures à l'étape de sélection et une partie des étapes de collecte sont postérieures à l'étape de sélection. Ainsi, des opérations de transfert d'informations sont opérées régulièrement vers le serveur central, ce qui confère un caractère régulier à l'actualisation des informations centralisées et une plus grande pertinence de celles-ci en vue d'un usage ultérieur.

L'invention a également pour objet un dispositif point d'accès sans fil d'un réseau de communication, le dispositif comprenant des circuits électroniques et/ou radioélectriques configurés pour :

- obtenir localement, à partir du dispositif point d'accès sans fil, au moins une première information, représentative d'un premier environnement électromagnétique à portée du dispositif point d'accès sans fil, et,
- en l'absence de détection d'un signal radar pour ledit canal, obtenir localement une information représentative d'un changement de statut d'occupation pour ledit canal, au sens de la détection d'un radar, puis,
- obtenir, depuis un serveur distant, au moins une seconde information, représentative d'un second environnement électromagnétique autour du dispositif point d'accès sans fil,
- sélectionner ledit canal de communication grâce à au moins la première information représentative dudit premier environnement, ladite information représentative dudit changement de statut d'occupation, et ladite au moins une seconde information représentative dudit second environnement,
- configurer une interface radio du dispositif point d'accès sans fil pour opérer des communications sans fil avec la station dans le canal sélectionné.

Avantageusement, un tel dispositif point d'accès sans fil peut donc opérer une sélection, une allocation et une configuration d'un canal avec une connaissance précise de son environnement électromagnétique, en termes d'occupation des canaux et de dispositifs voisins, dans le périmètre correspondant à sa portée en termes de réception électromagnétique et même plus loin.
L'invention concerne également un système dans un réseau de communication comprenant un dispositif point d'accès sans fil tel que précédemment décrit et un serveur comprenant des circuits électroniques et/ou radioélectriques configurés pour :

- recevoir depuis au moins un dispositif point d'accès sans fil connecté au réseau de communication des informations représentatives d'un ou plusieurs environnements autour d'un ou plusieurs dispositifs points d'accès sans fil comprenant ledit dispositif point d'accès sans fil,

envoyer, éventuellement en réponse à une requête, audit dispositif point d'accès sans fil, au moins une information représentative d'un environnement électromagnétique autour dudit dispositif point d'accès sans fil.
Enfin, l'invention a pour objet un produit programme d'ordinateur comprenant des instructions de codes de programme pour exécuter les étapes du procédé précité, lorsque le programme est exécuté par un processeur, ainsi qu'un dispositif support de stockage d'informations comprenant un tel produit programme d'ordinateur.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre un réseau de communication comprenant une pluralité de dispositifs points d'accès sans fil configurés pour exécuter un procédé de sélection d'un canal de communication DFS selon un mode de réalisation ;
[Fig. 2] est un ordinogramme illustrant des étapes d'un procédé de sélection d'un canal de communication, exécuté dans un point d'accès sans fil représenté sur la Fig. 1 ;

[Fig. 3] est un diagramme de principe illustrant une architecture d'un dispositif point d'accès sans fil selon un mode de réalisation ; et,

[Fig. 4] est un diagramme de principe illustrant une architecture d'un serveur du réseau de communication représenté sur la Fig. 1 et utilisé par le procédé décrit sur la Fig. 2.

EXPOSE DETAILLE DE MODES DE REALISATION

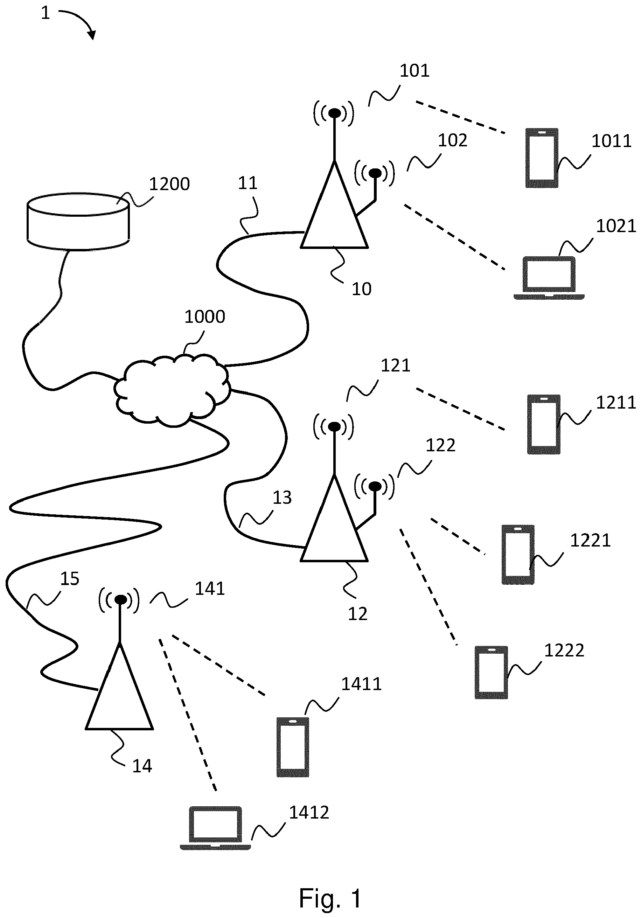

La **Fig. 1** illustre schématiquement un réseau de communication 1 comprenant un réseau étendu 1000 de type WAN (de l'acronyme anglais « *Wide Area Network* ») auquel sont connectés des dispositifs électroniques de type téléphone intelligent (ou « *smartphone* ») 1011, 1211, 1221, 1222, 1411 et ordinateur portable (ou « *laptop* ») 1021 et 1412. Chacun des dispositifs électroniques est connecté au réseau étendu 1000 par l'intermédiaire d'un équipement de type passerelle de communication réseau, encore usuellement appelé « passerelle réseau ». Un tel équipement est classiquement configuré pour interconnecter un réseau étendu et au moins un réseau local de type LAN (de l'acronyme anglais « Local Area Network ») et comprend usuellement des interfaces de connexion filaire et de connexion sans fil pour la connexion de dispositifs électroniques. Ainsi le smartphone 1011, est connecté au réseau étendu 1000 par l'intermédiaire d'un équipement de type passerelle réseau (non représenté) comprenant un dispositif point d'accès sans fil 10, lequel dispositif point d'accès sans fil 10 comprend une interface radio 101 et une interface radio 102. De la même façon, le laptop 1021 est connecté au réseau étendu 1000 par l'intermédiaire du dispositif point d'accès 10, et donc par l'intermédiaire de la même passerelle réseau que le smartphone 1011. Le smartphone 1011 est connecté au dispositif point d'accès sans fil 10 via l'interface radio 101 et le laptop 1021 est connecté au point d'accès sans fil 10 via l'interface radio 102. Dans la suite de la description, les termes « point d'accès » et « dispositif point d'accès » sont employés indifféremment et ont la même signification. Selon un mode de réalisation, le point d'accès sans fil 10 est configuré comme point d'accès résidentiel et est utilisable comme point d'accès sans fil par tous les dispositifs électroniques compatibles d'un premier foyer. De façon similaire à ce qui est mis en oeuvre dans le premier foyer, les smartphones 1211, 1221 et 1222 sont rattachés à un deuxième foyer et connectés au réseau étendu 1000 par l'intermédiaire d'un point d'accès 12, compris dans une passerelle réseau (non représentée) qui comprend des interfaces radio 121 et 122. Dans ce second foyer, le smartphone 1211 est connecté au point d'accès sans fil 12 via l'interface radio 121 et les smartphones 1221 et 1222 sont connectés au point d'accès sans fil 12 via l'interface radio 122. De façon similaire à ce qui est mis en oeuvre dans le premier foyer et dans le deuxième foyer, le smartphone 1411 et le laptop 1412 sont rattachés à un troisième foyer et connectés au réseau étendu 1000 par l'intermédiaire d'une passerelle réseau (non représentée) qui comprend le point d'accès sans fil 14, lequel point d'accès sans fil 14 comprend une seule interface radio 141. Selon des variantes, chacun des dispositifs points d'accès sans fil 10, 12 et 14 peut être implémenté non pas dans un équipement de type passerelle réseau, mais à l'extérieur d'un tel équipement et connecté à celui-ci par une liaison filaire ou sans fil. Il importe peu qu'un dispositif point d'accès parmi les dispositifs points d'accès sans fil 10, 12 ou 14 soit ou non intégré à un autre équipement tel qu'une passerelle, un équipement audio-vidéo ou un répéteur réseau, par exemple. Selon une variante, les dispositifs point d'accès sans fil 10, 12 et 14 pourraient chacun être connectés à une passerelle réseau par l'intermédiaire d'un ou plusieurs autres dispositifs points d'accès sans fil. Le smartphone 1411et le laptop 1412 sont donc tous deux connectés au point d'accès sans fil 14 via l'interface radio 141. Les dispositifs électroniques de type smartphone et laptop décrits ci-avant sont également appelés station dans la présente description. Bien évidemment d'autres types de stations peuvent être connectés à un point d'accès sans fil, tel que, à titre d'exemples, une imprimante, une caméra IP, un élément domotique de type capteur ou actionneur, un dispositif de stockage, etc. Le réseau étendu 1000 comprend un serveur 1200 dit « serveur distant », distant des points d'accès sans fil 10, 12, et 14. Le serveur 1200 du réseau étendu 1000, bien que distant des points d'accès sans fil 10, 12 et 14, est configuré pour pouvoir communiquer avec une multitude de points d'accès sans fil qui lui sont distants. Cette multitude de points d'accès sans fil comprend notamment les points d'accès sans fil 10, 12 et 14. On notera que les passerelles réseau des premier, deuxième et troisième foyers comprenant respectivement les points d'accès sans fil 10, 12 et 14 ne sont pas représentées sur la Fig. 1 et que seuls les points d'accès 10, 12 et 14 eux-mêmes sont représentés sur la Fig. 1. En effet, le détail d'implémentation des passerelles, et plus largement des connexions réseau 11, 13 et 15 permettant respectivement la connexion des points d'accès 10, 12 et 14 au réseau étendu 1000, n'est pas utile à une bonne compréhension de l'invention décrite ici.

Notons toutefois, de façon schématique, que les connexions réseau 11, 13 et 15 comprenant chacune une passerelle, laquelle passerelle comprend l'un des points d'accès sans fil 10, 12 ou 14, peuvent être de différents types. Par exemple les connexions réseau 11, 13 et 15 peuvent être implémentées chacune sous la forme d'une ligne d'abonné au téléphone, et la connexion utilise par exemple une technologie ADSL (sigle anglais pour « *Asymmetric Digital Subscriber Line* » et qui signifie « ligne d'abonné numérique et asymétrique »), une connexion de type fibre optique ou encore une liaison sans-fil de type accès sans-fil fixe ou « *fixed wireless access* » reposant sur des technologies d'accès 4G et/ou 5G par exemple. Ces exemples n'étant pas limitatifs.

Ainsi le serveur distant 1200 est configuré pour échanger des informations ou données avec des points d'accès distants et en particulier les points d'accès sans fil 10, 12 et 14. De façon symétrique, les points d'accès sans fil 10, 12 et 14 sont configurés chacun pour échanger des informations ou données avec le serveur distant 1200 qui implémente entre autres une fonction de serveur d'informations ou de données pour des points d'accès distants parmi lesquels les points d'accès sans fil 10, 12 et 14. Selon un mode de réalisation de l'invention, les échanges d'informations ou de données entre les points d'accès sans fil 10, 12 et 14 et le serveur distant 1200 sont opérés grâce à des protocoles tels que, à titre d'exemple, le protocole HTTP ( du sigle anglais « *HyperText Transfer Protocol* » qui signifie « protocole de transfert hypertexte »), qui est un protocole de niveau couche applicative et qui peut fonctionner sur n'importe quelle connexion réseau fiable, ou encore le protocole MQTT (du sigle anglais « *Message Queuing Telemetry Transport* ») conçu pour des échanges avec des dispositifs distants lorsque la bande passante est limitée. Un ou plusieurs autres protocoles peuvent toutefois être utilisés, pour peu qu'ils garantissent une transmission correcte des informations. Les termes « informations » et « données » sont à interpréter ici indifféremment. De nombreuses données, de différents types, peuvent être agrégées au sein d'un message en utilisant, par exemple, le format JSON (de l'acronyme anglais « JavaScript Object Notation »).

Selon un mode de réalisation, les dispositifs points d'accès sans fil du réseau de communication 1 parmi lesquels les dispositifs points d'accès sans fil 10, 12 et 14, et le serveur distant 1200 coopèrent aux fins de caractériser des premiers environnements électromagnétiques autour de chacun des dispositifs points d'accès sans fil 10, 12 et 14 du réseau de communication 1 et des seconds environnements électromagnétiques, plus vastes que les premiers environnements électromagnétiques, et comprenant tout ou partie de ces derniers, ou bien tout simplement voisins des premiers environnements électromagnétiques. Ainsi, un environnement électromagnétique défini comme étant un second environnement électromagnétique peut comprendre tout ou partie d'un ou plusieurs premiers environnements électromagnétiques, mais pas nécessairement.

Les termes « premier environnement électromagnétique » sont à interpréter ici comme un ensemble de caractéristiques d'occupation électromagnétique (ou radioélectrique) d'un espace autour d'un dispositif point d'accès sans fil, dont les caractéristiques peuvent être mesurées et relevées par ce point d'accès sans fil lui-même. Les termes « second environnement électromagnétique » sont à interpréter ici comme un ensemble de caractéristiques d'occupation électromagnétique (ou radioélectrique) d'un espace autour d'un point d'accès sans fil, dont certaines des caractéristiques peuvent être éventuellement mesurées et relevées par ce point d'accès sans fil, lui-même, et d'autres caractéristiques ne peuvent pas être mesurées par ce point d'accès sans fil. Ainsi, la connaissance de tout ou partie d'un second environnement électromagnétique autour d'un point d'accès sans fil, par ce même point d'accès sans fil, requiert une centralisation ou une mutualisation des caractéristiques de ce second environnement électromagnétique et une transmission d'une ou plusieurs informations représentatives de ce second environnement électromagnétique, à ce point d'accès sans fil. Astucieusement le serveur distant 1200 est configuré et utilisé pour une telle centralisation et mutualisation d'informations représentatives de ces caractéristiques, c'est-à-dire d'informations représentatives des premiers et seconds environnements électromagnétiques respectivement situés autour ou proches d'un point d'accès sans fil. Idéalement, la mutualisation des informations représentatives des seconds environnements électromagnétiques est telle que le serveur distant 1200 comprend des informations relatives à l'environnement de tous les points d'accès connectés au réseau de communication 1. Avantageusement, chacun des points d'accès sans fil qui mesure et relève des caractéristiques de l'environnement électromagnétique dans sa portée, soit d'un premier environnement électromagnétique, peut transmettre ces caractéristiques au serveur distant 1200 de sorte que ce dernier puisse les trier, les traiter, les analyser et bâtir des informations représentatives de seconds environnements électromagnétiques qui peuvent être ensuite transmises à un point d'accès sans fil concerné ou potentiellement concerné par ces informations. Le stockage des informations est réalisé dans une base de données au sein du serveur distant 1200 ou bien au sein d'un serveur tiers connecté au serveur distant 1200 et accessible depuis celui-ci. Selon une variante, plusieurs serveurs distants similaires au serveur distant 1200 peuvent être utilisés, soit parallèlement pour pallier une défaillance de l'un des serveurs, soit de façon complémentaire, en opérant par exemple, chacun pour une zone géographique prédéterminée (par exemple un serveur par région, ou par pays, ou par ville, etc.)

Les termes « caractéristiques d'occupation électromagnétique d'un espace autour d'un point d'accès sans fil » sont à interpréter comme des caractéristiques susceptibles d'indiquer, par exemple, si une bande fréquentielle est utilisée dans cet espace, si un canal de cette bande fréquentielle est occupé dans cet espace, si un canal occupé est alloué pour des communications sans fil selon une norme IEEE 802.11 dans cet espace ou encore est utilisé par un radar, tel qu'un radar météorologique, un radar d'aviation civile, ou encore un radar militaire dans cet espace. Ces caractéristiques peuvent aussi indiquer si un canal est anormalement bruité, ou perturbé, par une source identifiable ou non identifiable.

Selon un mode de réalisation, le serveur distant 1200 comprend donc une base de données d'informations représentatives d'environnements électromagnétiques de points d'accès sans fil distants comprenant les points d'accès sans fil 10, 12 et 14. Astucieusement, la base de données du serveur distant 1200 stocke les informations selon un référentiel permettant d'établir une cartographie des points d'accès sans fil comprenant des informations représentatives d'environnements électromagnétiques. En d'autres termes, les caractéristiques relevées sont référencées par rapport à une carte des points d'accès sans fil, c'est-à-dire en comprenant des informations de localisation couplées aux caractéristiques représentatives d'un premier et/ou second environnement électromagnétique tel que précédemment défini. Ainsi, de nombreuses informations sont stockées dans la base de données du serveur distant 1200, outre celles qui visent à identifier des canaux occupés, en particulier l'occupation de canaux DFS par des radars. Ces informations connexes sont par exemple une adresse IP WAN publique d'une passerelle réseau auquel un point d'accès sans-fil est connecté, une liste des points d'accès sans fil d'un foyer comprenant une passerelle donnée, ainsi que des dispositifs électroniques (stations) qui y sont connectés, une liste des réseaux sans-fil adjacents, notamment les réseaux compatibles avec une norme IEEE802.11. Une description des points d'accès sans fil et des stations qui y sont connectées peut comprendre, par exemple, les adresses MAC et IP de ces équipements, les bandes fréquentielles et canaux respectivement utilisés ou utilisables par ces équipements, les standards IEEE802.11 supportés par ces équipements, une évaluation des bandes passantes disponibles via les différents liens sans fil mis en oeuvre dans le foyer. Une description de réseaux sans fil adjacents compatibles avec une norme IEEE 802.11 peut comprendre un SSID, une ou plusieurs adresses MAC, des indicateurs de niveau de signal tels que des valeurs de RSSI. De telles informations sont typiquement représentatives de la constitution d'un foyer au sens des communications sans fil au sein ou voisinage de ce foyer.

Des informations relatives à l'occupation de canaux DFS peuvent comprendre, par exemple, des listes de séries temporelles comprenant elles-mêmes chacune des informations d'horodatage, une bande fréquentielle sélectionnée, un numéro de canal sélectionné dans une bande fréquentielle, un indicateur de statut d'un canal sélectionné, par exemple prenant une valeur parmi les valeurs « libre » et « radar détecté », un type de radar, par exemple, civil, militaire, météorologique, une puissance en réception d'un radar, exprimée par exemple en dBm. Il est à noter que la présence d'un radar dans un canal peut être conditionnée par un niveau de réception supérieur à une valeur seuil prédéterminée, par exemple égale à -62.5 dBm tel que défini dans la norme ETSI EN 301 893 v2 ou l'une de ses évolutions, applicable en Europe ou encore selon la règlementation *Electronic Code of Fédéral Régulations* applicable aux Etats-Unis. Les termes « bande fréquentielle » sont à interpréter ici de façon générique, c'est-à-dire comme représentant un intervalle de fréquences adjacentes. Ainsi, un canal dans la bande fréquentielle des 5 GHz est à interpréter comme une bande fréquentielle étroite dans une bande fréquentielle plus large.

Selon un mode de réalisation de l'invention, si certaines des informations représentatives des premiers et seconds environnements électromagnétiques, présentes dans la base de données du serveur distant 1200, le sont du fait d'étapes successives de collectes d'informations opérées par des points d'accès sans fil du réseau de communication 1, d'autres informations peuvent être saisies dans la base de données du serveur distant 1200 selon une autre méthode. Par exemple, des informations peuvent être collectées par d'autres voies, ou par des services tiers, ou des intervenants extérieurs et saisies manuellement ou automatiquement dans la base de données du serveur distant 1200. Ainsi, par exemple, des bases de données de positions occupées par des radars civils, militaires ou météorologiques peuvent être insérées dans la base de données du serveur distant 1200. De telles informations peuvent en outre être combinées à des informations connexes visant à définir, par exemple, un taux d'utilisation d'un radar en particulier, ou encore des périodes d'utilisation habituelles de ce radar. Par exemple, un radar militaire peut n'être rendu actif que pour des phases d'exercice et inactivé systématiquement en dehors de ces phases.

Avantageusement, la base de données du serveur distant 1200 peut comprendre des informations ayant toutes un lien entre elles, par exemple, la base de données peut constituer ou être comprise dans une plateforme dite « plateforme cloud » d'un même opérateur de télécommunications et recenser toutes les informations en lien avec ses abonnés. L'opérateur pourrait tout aussi bien être un fournisseur de services utilisant des infrastructures de plusieurs opérateurs de télécommunications et le point commun entre les données serait alors qu'elles correspondent toutes à des données rattachées aux clients de cet opérateur, c'est-à-dire des données en lien avec leurs foyers et les différents voisinages de leurs foyers.

Selon un mode de réalisation de l'invention, les informations stockées dans la base de données du serveur distant 1200 sont rattachées à des données de localisation, dès que cela est possible. Ainsi, une plateforme cloud d'un opérateur peut avantageusement collecter et traiter des informations représentatives d'environnements électromagnétiques émises par les différents points d'accès sans fil des différents foyers qui lui sont connectés et traiter ces informations en adoptant une approche « *crowdsensing* » (ou de mesures participatives) visant à :

- construire et maintenir une carte maillée montrant la position relative des points d'accès sans fil et/ou des foyers entre eux,
- superposer à cette carte maillée les informations d'occupation des différents canaux vis-à-vis de la détection de signaux radar.

Les informations de détection des signaux radar peuvent être, par exemple, une absence de détection, une détection, une puissance, des caractéristiques d'émission des signaux radar, un horodatage.

Avantageusement, il est possible, grâce à ces informations, de déterminer une liste priorisée de canaux de communication à des points d'accès sans fil, éventuellement sur requête de ces points d'accès sans fil.

Selon un mode de réalisation de l'invention, des listes priorisées de canaux DFS disponibles sont transmises aux différents points d'accès de façon récurrente. Selon une variante, et afin de limiter l'encombrement du réseau du fait de la transmission d'office de telles informations, les listes priorisées sont transmises sur requêtes. Selon une autre variante encore, des listes sont transmises régulièrement mais avec une fréquence d'émission réduite et des transmissions en réponse à une requête peuvent être opérées entre deux transmissions d'office.

Ainsi, il est possible pour un point d'accès d'économiser un temps considérable dans un processus de sélection et d'allocation d'un canal DFS, c'est-à-dire d'un canal susceptible d'être occupé par une application prioritaire telle qu'une détection opérée au moyen d'un radar utilisant ce canal.

Un autre avantage réside dans le fait qu'une telle coopération d'un serveur distant centralisant des informations et d'une pluralité de points d'accès sans fil qui lui sont connectés permet d'optimiser la gestion, la configuration et donc l'utilisation des équipements sans fil (passerelles réseau, extendeurs de réseaux, etc.) à l'échelle d'un territoire donné ou d'une zone géographique prédéfinie.

Un processus d'élaboration d'une carte maillée par le serveur distant 1200 peut être défini, par exemple, en déterminant la position géographique d'un point d'accès sans fil ou d'un foyer comprenant un point d'accès sans fil, lorsqu'une ou plusieurs informations représentatives d'un environnement électromagnétique sont transmises par un point d'accès sans fil au serveur distant 1200. Ainsi, la latitude et la longitude d'un foyer peuvent être déterminées par exemple à partir de l'adresse IP publique de la passerelle utilisée par le point d'accès sans fil. Une telle localisation peut se faire par l'intermédiaire de services de géolocalisation disponibles sur internet, par exemple, qui permettent de déterminer une localisation plus ou moins précise d'un foyer. Cette technique de localisation d'un point d'accès sans fil ou d'un foyer n'est pas toujours efficace et la localisation d'un foyer peut aussi être déterminée grâce à des techniques de triangulation par rapport à d'autres foyers de référence dont la position est déjà connue. Ceci est par exemple rendu possible grâce à la transmission de listes de réseaux et points d'accès sans fil précédemment envoyées au serveur distant 1200 par des points d'accès sans fil. D'autres informations peuvent être utilisées pour la construction de la base de données du serveur distant 1200, comme les adresses des clients d'un opérateur, et les informations de localisation correspondantes. A partir de tout ou partie de ces informations de localisation, un géocode est déterminé pour chaque foyer, pour pouvoir référencer géographiquement (ou indexer) les données dans la base de données du serveur distant 1200.

Les géocodes peuvent être déterminés en utilisant par exemple l'algorithme *Geohash* disponible dans le domaine public, ou un algorithme similaire, qui subdivise la surface terrestre selon une grille hiérarchique. L'algorithme utilisé permet alors de faire correspondre à une position GPS un géocode qui permet d'identifier de manière unique une zone géographique dont la précision (et donc la surface) peut être définie arbitrairement selon la longueur du géocode défini.

L'utilisation d'un géocode permet alors de stocker des données dans la base de données selon leur proximité géographique (même préfixe de géocode) et dont la précision peut être ajustée dynamiquement selon les traitements à réaliser. Un tel mécanisme permet de regrouper des foyers d'un même quartier d'une ville, d'un même immeuble, d'une même ville ou d'une même région, par exemple.

Avantageusement, il est ainsi possible de recenser la liste des canaux DFS encombrés pour chacune des zones définissables en référence à un géocode ou plus largement à une information représentative d'une situation géographique, ou d'une proximité géographique (en d'autres termes, une localisation). Une liste pertinente de canaux DFS encombrés peut alors être transmise à un point d'accès sans fil du réseau de communication 1 par le serveur distant 1200 opérant des fonctions de *plateforme cloud* c'est-à-dire de mutualisation de la connaissance de l'occupation de canaux DFS, afin d'optimiser les opérations de sélection d'un canal par les points d'accès sans fil du réseau de communication 1.

Astucieusement et selon un mode de réalisation de l'invention, un indice de disponibilité de canal DFS est calculé à partir de données disponibles dans la base de données du serveur distant 1200. Plusieurs modes de calcul d'un indice de disponibilité d'un canal DFS peuvent être utilisés. Dans le cas où des informations d'occupation des canaux DFS sont déjà disponibles dans la base de données pour une localisation déterminée, ou une zone géographique déterminée, l'indice de disponibilité de chaque canal DFS peut par exemple être calculé comme étant la moyenne des observations (ou statut du canal DFS) référencées avec un géocode ou une quelconque information représentative d'une proximité géographique de référence de la zone concernée. Dans le cas où il n'existerait pas encore d'information d'occupation de canaux DFS pour une zone donnée dans la base de données du serveur distant 1200, un indice de disponibilité d'un canal DFS peut être déterminé comme étant la moyenne des observations référencées pour des zones adjacentes à la zone concernée. Dans un exemple, les zones adjacentes sont aisément identifiables par leurs géocodes respectifs, lesdits géocodes partageant une portion de codage de localisation commun avec le géocode de la zone concernée. Ainsi, une carte maillée composée de tuiles est telle que chaque zone définie avec une précision donnée (et donc une surface donnée) possède huit zones adjacentes qui représentent successivement chacune une zone nord-ouest, une zone nord, une zone nord-est, une zone ouest, une zone est, une zone sud-ouest, une zone sud et une zone sud-est. Par exemple, si toutes les zones adjacentes précitées présentent chacune, pour un canal DFS prédéterminé (ex : le canal DFS 100), un indice de disponibilité d'une valeur maximale égale à 1, alors l'indice de disponibilité de ce canal DFS 100 dans la zone ciblée, centrale, présente également une valeur maximale égale à 1. Dans le cas contraire, si toutes les zones adjacentes précitées présentent chacune, pour ce canal DFS prédéterminé (toujours le canal DFS 100, par exemple), un indice de disponibilité d'une valeur minimale égale à 0, alors l'indice de disponibilité de ce canal DFS dans la zone ciblée, centrale, présente également une valeur minimale égale à 0. Enfin, si les indices de disponibilité des huit zones adjacentes présentent des valeurs disparates, pour un canal DFS déterminé, par exemple, successivement 1 ; 1 ; 1 ; 0.6 ; 0.7 ; 0.25 ; 0.3 et 0.4, alors l'indice de disponibilité pour ce canal dans la zone centrale, ciblée, sera égal à la moyenne de ces huit valeurs, soit égal à 0.65. Selon un raisonnement similaire, un mode de détermination d'indice, pour un canal DFS donné, peut être défini par exemple de sorte qu'une valeur de l'indice égale à 0,5 pour ce canal DFS et dans une zone géographique donnée, signifie que ce canal DFS est signalé comme étant occupé par un radar dans une première zone adjacente, et non occupé par un radar dans une seconde zone adjacente, les autres zones adjacentes n'ayant pas encore été scrutées. Toujous selon le même raisonnement, une valeur de l'indice égale à 0,66 pour un canal DFS et dans une zone géorgaphique donnée, signifie que ce canal DFS est signalé comme étant occupé par un radar dans deux zones adjacentes, et non occupé par un radar dans une troisième zone adjacente, les autres zones adjacentes n'ayant pas encore été scrutées.

Bien évidemment le calcul d'un indice de disponibilité d'un canal dans une zone ciblée (ou zone d'intérêt) ne se limite pas aux exemples décrits ci-avant. Par exemple, selon la distance existante entre des foyers de référence pour lesquels des données sont disponibles et le foyer pour lequel un indice de disponibilité d'un canal DFS doit être déterminé, il est possible d'interpoler des mesures de réception de signaux radar afin d'en estimer la puissance à une position bien spécifique, puis de déterminer plus précisément le statut du radar à cette position, par exemple selon que la puissance calculée par interpolation soit ou non supérieure à une valeur seuil prédéterminée, telle que, par exemple - 62.5 dBm.

Par exemple, si un signal radioélectrique en provenance d'un radar est perçu dans un canal avec une puissance mesurée supérieure à -62.5 dBm, alors la valeur de l'indice de disponibilité pour ce canal aura la valeur 0 qui signifie que le canal est indisponible. Inversement, si un signal radioélectrique en provenance d'un radar est perçu dans un canal avec une puissance mesurée inférieure à -62.5 dBm, alors la valeur de l'indice de disponibilité pour ce canal aura la valeur 1 qui signifie que le canal est disponible. La définition de l'indice au regard de la disponibilité est fixée par convention, de façon arbitraire, et une convention inverse pourrait bien évidement être utilisée de sorte qu'une valeur d'un indice égale à 1 corresponde à un canal indisponible et une valeur de ce même indice égale à 0 corresponde à un canal disponible. Finalement, l'indice de disponibilité calculé pour un canal reflète la probabilité d'occupation d'un canal DFS. Avantageusement, les valeurs comparées des indices d'une pluralité de canaux DFS permettent d'établir une priorité par le biais d'une liste classée des canaux DFS à traiter selon un ordre de priorité par un dispositif point d'accès sans fil souhaitant allouer un canal DFS pour opérer des communications sans fil.

Par exemple, une liste de canaux et d'indices associés transmise entre le serveur distant 1200 et un point d'accès sans fil du réseau de communication 1 pourrait être schématisée par :

$$100 : i = 1,$$

$$104 : i = 1,$$

$$108 : i = 0.8,$$

$$112 : i = 0,$$

$$116 : i = 0,$$

où le numéro (100, 104, etc) est un identifiant de canal et i est un indice de disponibilité dont une valeur maximale définie égale à 1 signifie que le canal est assurément disponible et une valeur minimale égale à 0 signifie que le canal est assurément indisponible.

Selon un mode de réalisation de l'invention, le serveur distant 1200 transmet, d'office ou sur requête, une liste de canaux DFS classée par ordre de disponibilité à tout ou partie des points d'accès sans fil du réseau de communication 1 de sorte que chacun des points d'accès puisse connaître quel est le canal DFS le plus probablement disponible parmi les canaux DFS susceptibles d'être utilisés par ce point d'accès sans fil. Avantageusement, un point d'accès combine les informations dont il dispose, pour les avoir mesurées lui-même, avec les informations dont il dispose après les avoir reçues du serveur distant 1200. Ainsi, le processus de sélection d'un canal DFS par un point d'accès sans fil est hybride, en ce sens qu'il n'est ni seulement basé sur des informations centralisées, ni seulement basé sur des informations locales. La variabilité des informations locales pouvant par exemple être accrue au regard de celles obtenues depuis le serveur distant 1200 qui mutualise des informations depuis tout ou partie des points d'accès sans fil du réseau de communication 1.

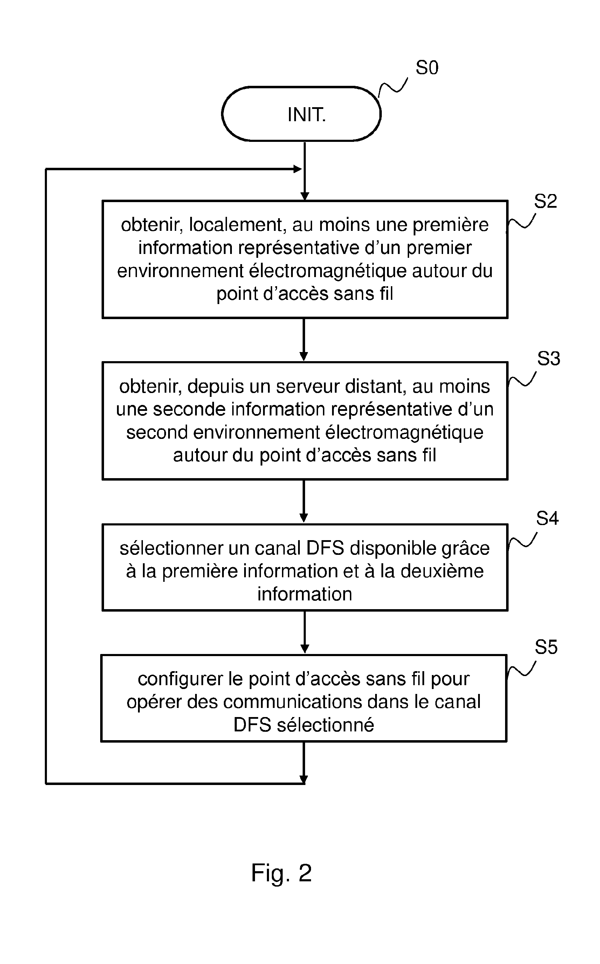

La **Fig. 2** est un ordinogramme représentant des étapes principales d'un procédé de sélection et d'allocation d'un canal DFS par un dispositif point d'accès sans fil du réseau de communication 1. Selon un mode de réalisation de l'invention, le procédé représenté sur cette Fig.2 est exécuté dans chacun des dispositifs points d'accès sans fil du réseau de communication 1, soit dans les dispositifs points d'accès sans fil 10, 12 et 14.

Une étape **S0** correspond à un fonctionnement nominal des différents dispositifs du réseau de communication 1 au terme d'une initialisation de tous les dispositifs présents dans le réseau, par exemple après leurs mises sous tension respectivement et leurs phases de configuration et d'autotest respectives. En d'autres termes, l'ensemble des dispositifs représentés sur la Fig. 1 coexistent dans le réseau de communication 1 et opèrent des transmissions requises selon le fonctionnement propre à chaque station mobile, ainsi qu'aux dispositifs points d'accès sans fil 10, 12 et 14 du réseau de communication 1. A ce stade, après avoir déterminé qu'une sélection de canal parmi des canaux DFS est souhaitable ou requise pour l'un au moins des dispositifs points d'accès sans fil 10, 12, ou 14, le procédé est initié. Il peut être déterminé qu'une sélection de canal parmi une liste de canaux DFS est requise, soit parce qu'un utilisateur opère une configuration manuelle d'un point d'accès sans fil du réseau de communication 1, soit parce qu'un procédé automatisé embarqué dans l'un quelconque des points d'accès sans fil du réseau de communication 1 scrute les canaux aux fins d'optimiser leur allocation. Dans la suite de la description du procédé illustré sur la Fig. 2, l'exemple de sélection et d'allocation d'un canal DFS est décrit pour le point d'accès sans fil 14 du réseau de communication 1, situé dans le troisième foyer parmi les trois foyers précédemment cités en rapport avec la Fig. 1.

Selon un mode de réalisation, le dispositif point d'accès sans fil 14, devant choisir un canal possiblement déjà utilisé, utilise des ressources internes pour obtenir localement au moins une première information représentative d'un premier environnement électromagnétique autour de lui, c'est-à-dire à portée de lui en termes de réception de signaux électromagnétiques. Ainsi, lors d'une étape **S2**, le dispositif point d'accès sans fil scrute par exemple le canal DFS 100, choisi par un utilisateur du troisième foyer lors d'une configuration manuelle du point d'accès sans fil 14, aux fins de vérifier si des signaux représentatifs de la présence d'un radar sont décelés sur ce canal DFS 100 (dans la bande fréquentielle définissant ce canal DFS 100). Selon un mode de réalisation, et en l'absence de signaux radar détectés, le point d'accès sans fil 14 consulte une table d'informations qui lui est interne mentionnant la dernière date (et heure) à laquelle une modification du statut du canal DFS 100 a eu lieu. Cette lecture lui permet d'obtenir une seconde information du premier environnement électromagnétique autour de lui en lui indiquant par exemple, que bien qu'aucun signal radar ne soit détecté à ce stade, un changement de statut d'occupation a été opéré pour ce canal DFS 100 dans les deux heures précédentes, au sens de la détection d'un radar, ce qui pourrait donc potentiellement indiquer une grande variabilité du statut de ce canal en termes d'occupation par un radar. Ces informations sont de nature à présumer qu'un radar présent dans ce premier environnement électromagnétique autour du point d'accès sans fil 14 pourrait être activé sous peu, ce qui rendrait alors le canal inutilisable pour une connexion d'une station, telle que par exemple laptop 1412 habituellement présent dans ce foyer (le troisième foyer). Lors d'une étape **S3**, le point d'accès sans fil 14 adresse alors une requête au serveur distant 1200 qui centralise de nombreuses informations représentatives d'un second environnement électromagnétique, tel que par exemple un environnement électromagnétique comprenant le deuxième et le troisième foyers, relativement proches l'un de l'autre. La requête est transmise dans un message au format HTTP, porté selon un protocole de communication TCP, depuis le dispositif point d'accès sans fil 14 vers le serveur distant 1200 qui centralise à ce stade des informations sur l'occupation des canaux DFS dans les environnements de tout ou partie des points d'accès sans fil du réseau de communication 1. A réception de cette requête en vue de connaître l'occupation des canaux DFS autour du dispositif point d'accès sans fil 14 du troisième foyer, le serveur distant 1200 identifie la position géographique du troisième foyer d'où provient la requête, par exemple en se référant à son adresse IP publique, et détermine un géocode dont la structure (par exemple la longueur) indique une taille de zone d'intérêt. La taille de la zone d'intérêt concernée par la requête peut être déterminée par un opérateur de services, ou encore prédéterminée par le dispositif point d'accès sans fil 14, par exemple. Le serveur distant 1200 scrute alors sa base de données en vue de l'extraction des données relatives à l'occupation des canaux DFS dans la zone localisée par le géocode, ainsi que dans les zones adjacentes (par exemples huit zones, lorsque la carte est de type en forme de tuiles hiérarchisées). Dans un autre exemple, le serveur distant 1200 est configuré pour déterminer des coordonnées selon un système tel que le « Global Positioning System » (de l'anglais et qui signifie « système de positionnement global) ou « GPS » (son sigle), et en particulier est apte à déterminer des coordonnées GPS du dispositif point d'accès sans fil 14, et est capable d'extraire des données relatives à l'occupation des canaux DFS dans la zone localisée par ces coordonnées GPS, ainsi que dans les zones adjacentes localisables par leurs coordonnées GPS. Les données extraites de la base de données par le serveur distant 1200 sont alors structurées de sorte à fournir des informations relatives à l'occupation des canaux DFS dans la zone d'intérêt du dispositif point d'accès sans fil 14. Selon un mode de réalisation de l'invention, les informations sont transmises sous forme de suite de données comprenant chacun un horodatage, un géocode ou encore des coordonnées selon un autre type de système de positionnement, un numéro de canal et un statut représentant la disponibilité du canal indiqué (par exemple 0 pour indisponible et 1 pour disponible).

Selon une variante du mode de réalisation, le statut d'un canal DFS comprend un indice de disponibilité de ce canal DFS, calculé par le serveur distant 1200. Par exemple l'indice de disponibilité vu depuis le serveur distant 1200 est égal à 0.65, compte tenu des informations dont il dispose, et indépendamment de l'absence de détection de signaux radar vu directement et localement depuis le point d'accès sans fil 14.

Les informations transmises constituent alors une liste de canaux DFS comprenant pour chacun des canaux une information représentative de sa disponibilité, soit en d'autres termes, un indice de disponibilité pour chacun des canaux accessibles, ou pour une partie de canaux accessibles, pour le dispositif point d'accès sans fil 14. Par exemple, les informations transmises par le serveur distant 1200 au dispositif point d'accès sans fil 14 indiquent que le canal DFS 104, voisin du canal DFS 100 dans une même bande fréquentielle, présente l'indice de disponibilité le plus élevé, et que sa valeur est en outre la valeur maximale de disponibilité qui puisse être atteinte, soit selon l'exemple décrit, la valeur de l'indice pour le canal DFS 104 est égale à 1. Selon un mode de réalisation, le serveur distant 1200 transmet au dispositif point d'accès sans fil 14 des informations connexes relatives au canal DFS 104 dans la mesure où celui-ci présente le plus grand indice de disponibilité. Ces informations connexes indiquent, par exemple, que le canal DFS 104 n'a pas été signalé comme étant occupé par un radar depuis plus de deux années consécutives, dans la zone géographique du troisième foyer, ainsi que dans les zones géographiques adjacentes comme par exemple une zone comprenant le deuxième foyer proche, soit en d'autres termes dans la zone géographique du dispositif point d'accès sans fil 14 ainsi qu'aux alentours. Cette information est donc précieuse pour le procédé d'allocation du dispositif point d'accès sans fil 14, car si ce dernier est potentiellement capable de mémoriser des caractéristiques relatives à l'environnement électromagnétique à sa portée, il ne l'est pas pour ce qui concerne l'espace électromagnétique en dehors de sa portée.

Ces informations étant disponibles, le dispositif point d'accès sans fil 14 sélectionne alors, lors d'une étape **S4**, selon l'exemple décrit, le canal DFS 104, qui apparaît être le plus probablement disponible et opère des mesures sur ce canal DFS 104 avant de l'allouer, ou alloue le canal DFS 104 à des communications, puis opère des mesures non continues aux fins de confirmer sa disponibilité à moyen terme. En l'absence de détection de signaux radar sur le canal DFS 104, le dispositif sans fil 14 « valide » l'utilisation de ce canal DFS 104 pour des transmissions sans fil, par exemple dans un cadre résidentiel, entre le point d'accès sans fil 14 et un laptop, un smartphone ou tout autre dispositif d'usage traditionnellement domestique, et reconfigure ou configure alors ses circuits de sorte à utiliser le canal DFS 104 pour de telles transmissions, lors d'une étape **S5**.

Selon un mode de réalisation de l'invention, le dispositif point d'accès sans fil 14 transmet des informations au serveur central 1200 l'informant de l'utilisation du canal 104. Optionnellement, le dispositif point d'accès sans fil 14 opère une actualisation de toutes les informations dont il peut disposer en termes d'occupation des canaux et de disponibilité de réseaux dans son entourage, vers le serveur central distant (SSID, BSSID, RSSI, nombre de stations connectées, type des stations, par exemple).

Selon une variante du mode de réalisation, le dispositif point d'accès sans fil 14 transmet, lors d'une étape optionnelle intermédiaire (non représenté sur la Fig. 2) entre l'étape S0 et l'étape S2, des informations représentatives de l'occupation des canaux et de la disponibilité de réseaux dans son entourage, de façon ponctuelle, ou plus récurrente, de sorte à coopérer régulièrement à l'effort de centralisation et de mutualisation des informations représentatives des environnements électromagnétiques de tous les points d'accès du réseau de communication 1, idéalement, ou à tout le moins d'un grand nombre d'entre eux.

L'ensemble des moyens matériels et logiciels implémentés dans chacun des dispositifs points d'accès sans fil 10, 12, et 14 est nommé « *agent cloud* » et l'ensemble des moyens matériels et logiciels implémentés dans le serveur central 1200 est nommé « *plateforme cloud* ». Dans un autre exemple la passerelle résidentielle à laquelle est connecté le dispositif point d'accès sans fil 14, ainsi qu'éventuellement d'autres dispositifs points d'accès sans fil et des stations, comprend un agent cloud. Cet agent cloud est configuré pour communiquer avec le dispositif point d'accès sans fil 14 et avec le serveur distant 1200 et est configuré pour réaliser les étapes du procédé décrit dans la Fig. 2 à la place du point d'accès sans fil 14. Cet agencement de l'agent cloud dans la passerelle résidentielle permet d'avoir une gestion centralisée de l'exécution du procédé décrit dans la Fig. 2 et permet en outre de réduire la complexité du dispositif point d'accès sans fil 14.

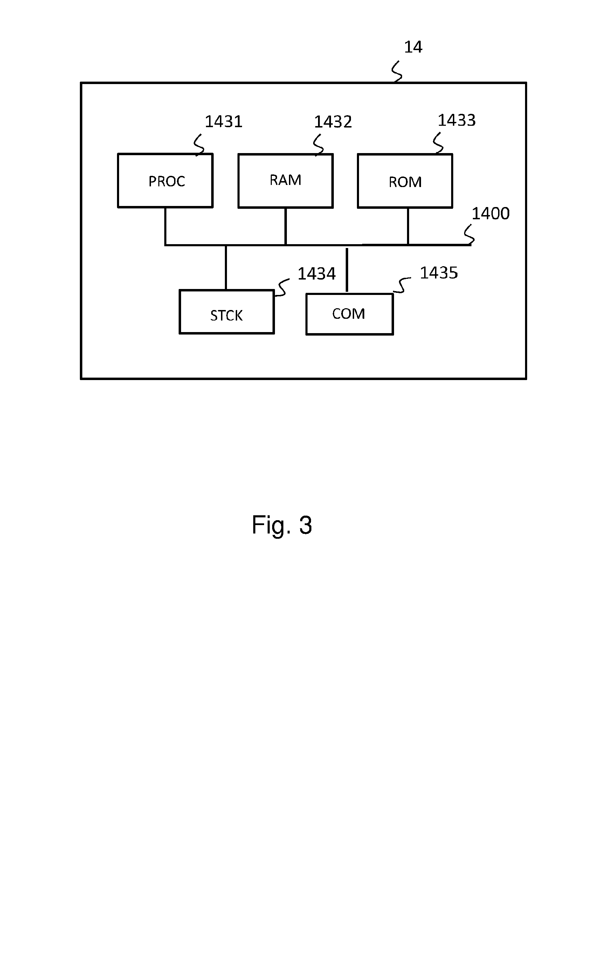

La **Fig. 3** illustre schématiquement un exemple d'architecture interne d'un dispositif point d'accès sans fil à un réseau de communication comprenant un *agent cloud*. Considérons à titre illustratif que la Fig. 3 illustre un agencement interne du dispositif point d'accès sans fil 14. On note que la Fig. 3 pourrait aussi illustrer schématiquement un exemple d'architecture matérielle d'un module de traitement de type *agent cloud* compris dans le point d'accès sans fil 14 ou encore un dispositif passerelle réseau domestique comprenant le dispositif point d'accès sans fil 14, lequel comprend un *agent cloud*.

Selon l'exemple d'architecture matérielle représenté à la Fig. 3, le dispositif point d'accès sans fil 14 comprend alors, reliés par un bus de communication 1400 : un processeur ou CPU (« Central Processing Unit » en anglais) 1431 ; une mémoire vive RAM (« Random Access Memory » en anglais) 1432 ; une mémoire morte ROM (« Read Only Memory » en anglais) 1433 ; une unité de stockage telle qu'un disque dur (ou un lecteur de support de stockage, tel qu'un lecteur de cartes SD (« Secure Digital » en anglais) 1434 ; au moins une interface de communication 1435 permettant au point d'accès sans fil 14 de communiquer avec des dispositifs présents dans le réseau de communication 1, tels que par exemple, les points d'accès 10 et 12 ou encore le serveur distant 1200.

Le processeur 1431 est capable d'exécuter des instructions chargées dans la RAM 1432 à partir de la ROM 1433, d'une mémoire externe (non représentée), d'un support de stockage (tel qu'une carte SD), ou d'un réseau de communication. Lorsque le dispositif point d'accès sans fil 14 est mis sous tension, le processeur 1431 est capable de lire de la RAM 1432 des instructions et de les exécuter. Ces instructions forment un programme d'ordinateur causant la mise en oeuvre, par le processeur 1431, de tout ou partie d'un procédé décrit en relation avec la Fig. 2 ou les variantes décrites de ce procédé.

Tout ou partie du procédé décrit en relation avec la Fig. 2, ou ses variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif point d'accès sans fil 14 comprend de la circuiterie électronique configurée pour mettre en oeuvre le procédé décrit en relation avec lui. Bien évidemment, le dispositif point d'accès sans fil 14 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus. Cette liste étant non exhaustive.

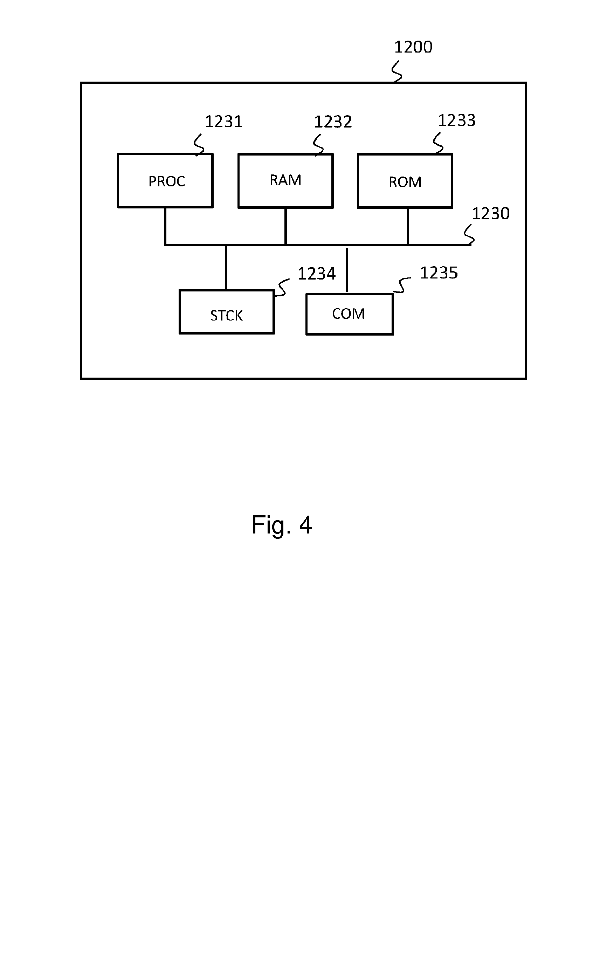

La **Fig. 4** illustre schématiquement un exemple d'architecture interne d'un dispositif serveur dans un réseau de communication comprenant une *plateforme cloud.* Considérons à titre illustratif que la Fig. 4 illustre un agencement interne du dispositif serveur distant 1200. On note que la Fig. 4 pourrait aussi illustrer schématiquement un exemple d'architecture matérielle d'un module de traitement de type *plateforme cloud* compris dans un serveur distant 1200 ou encore un dispositif de routage réseau comprenant le serveur distant 1200, lequel comprend une *plateforme cloud.*

Selon l'exemple d'architecture matérielle représenté à la Fig. 4, le serveur distant 1200 comprend alors, reliés par un bus de communication 1230 : un processeur ou CPU (« Central Processing Unit » en anglais) 1231 ; une mémoire vive RAM (« Random Access Memory » en anglais) 1232 ; une mémoire morte ROM (« Read Only Memory » en anglais) 1233 ; une unité de stockage telle qu'un disque dur (ou un lecteur de support de stockage, tel qu'un lecteur de cartes SD (« Secure Digital » en anglais) 1234 ; au moins une interface de communication 1235 permettant au serveur distant 1200 de communiquer avec des dispositifs présents dans le réseau de communication 1, tels que par exemple, les points dispositifs points d'accès sans fil 10, 12 et 14 ou les passerelles réseau embarquant respectivement ces dispositifs points d'accès sans fil ou étant reliées à ces dispositifs.

Le processeur 1231 est capable d'exécuter des instructions chargées dans la RAM 1232 à partir de la ROM 1233, d'une mémoire externe (non représentée), d'un support de stockage (tel qu'une carte SD), ou d'un réseau de communication. Lorsque le serveur distant 1200 est mis sous tension, le processeur 1231 est capable de lire de la RAM 1232 des instructions et de les exécuter. Ces instructions forment un programme d'ordinateur causant la mise en oeuvre, par le processeur 1231, d'une partie d'un procédé décrit en relation avec la Fig. 2 ou un procédé complémentaire à celui-ci.

Tout ou partie du procédé implémenté par le serveur distant 1200, ou ses variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le serveur distant 1200 comprend de la circuiterie électronique configurée pour mettre en oeuvre le procédé décrit en relation avec lui-même ainsi qu'avec les dispositifs points d'accès sans fil 10, 12, et 14. Bien évidemment, le serveur distant 1200 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus. Cette liste étant non exhaustive.

Selon un mode de réalisation, le serveur distant 1200 disposant d'informations relatives au fonctionnement des différents points d'accès sans fil du réseau de communication 1 peut avantageusement superviser des opérations de collecte d'informations depuis les points d'accès sans fil, pour affiner de façon progressive et continuer la pertinence de la cartographie réalisée. Ainsi, le serveur distant 1200 peut déléguer des opérations d'analyse à des dispositifs points d'accès sans fil du réseau de communication qui sont peu ou pas occupés à réaliser des transmissions. Le serveur distant 1200 peut également, par exemple, préparer pour chaque dispositif point d'accès sans fil, une liste de canaux à analyser en priorité afin de compléter les données déjà collectées par des données étant identifiées comme manquantes ou étant jugée trop anciennes.

Enfin, le serveur distant 1200 peut collaborer avec un ou plusieurs autres serveurs centralisant de l'information, comme par exemple un serveur d'un opérateur recensant les canaux les plus utilisés dans un réseau de communication ou un sous-réseau de communication.

L'invention ne se limite pas aux seuls modes de réalisation et exemples précédemment décrits mais concerne tout procédé de sélection d'un canal utilisant des informations locales disponibles à portée d'un dispositif point d'accès sans fil comprenant un *agent cloud* et utilisant en outre des informations centralisées et mutualisées par une *plateforme cloud* pour opérer une sélection d'un canal et une configuration du dispositif point d'accès sans fil en vue d'une utilisation de ce canal pour des transmissions sans fil, le canal étant potentiellement prioritaire pour une application tierce, notamment du fait d'une règlementation.

## Revendications

1. Procédé de sélection d'un canal de communication sans-fil, entre un dispositif point d'accès sans-fil (14) d'un réseau de communication (1) et une station (1411), le procédé étant exécuté dans le dispositif point d'accès sans-fil (14) dudit réseau de communication (1), le procédé comprenant :

   - obtenir localement (S2), à partir dudit dispositif point d'accès sans fil, au moins une première information, représentative d'un premier environnement électromagnétique à portée dudit dispositif point d'accès sans-fil, et,
   - en l'absence de détection d'un signal radar pour ledit canal, obtenir localement une information représentative d'un changement de statut d'occupation pour ledit canal, au sens de la détection d'un radar, puis,
   - obtenir (S3), depuis un serveur distant (1200), au moins une seconde information, représentative d'un second environnement électromagnétique autour dudit dispositif point d'accès sans fil, puis,
   - sélectionner (S4) ledit canal de communication grâce à au moins ladite première information représentative dudit premier environnement, ladite information représentative dudit changement de statut d'occupation, et ladite au moins une seconde information représentative dudit second environnement, et,
   - configurer (S5) une interface radio dudit dispositif point d'accès sans fil (14) pour opérer des communications sans fil avec ladite station dans le canal sélectionné.

2. Procédé de sélection d'un canal de communication sans-fil selon la revendication précédente dans lequel ladite première information est représentative d'une bande fréquentielle et la seconde information est représentative d'au moins un niveau de disponibilité d'un canal de communication sans fil dans ladite bande fréquentielle.

3. Procédé de sélection d'un canal de communication sans-fil selon l'une des revendications 1 et 2 dans lequel ladite seconde information est comprise dans une liste d'informations relatives à différents canaux et étant chacune représentative d'au moins un niveau de disponibilité d'un canal de communication sans fil parmi plusieurs canaux de communication sans fil dans ladite bande fréquentielle.

4. Procédé de sélection d'un canal de communication sans-fil selon l'une des revendications précédentes dans lequel l'obtention de ladite seconde information depuis ledit serveur distant est opérée suite à l'émission, par ledit dispositif point d'accès sans fil, vers ledit serveur distant (1200), d'une requête émise en vue d'obtenir au moins ladite seconde information.

5. Procédé de sélection d'un canal de communication sans-fil selon l'une des revendications précédentes dans lequel ledit second environnement est défini en référence à une ou plusieurs informations de localisation dudit dispositif point d'accès sans fil (14) dans un référentiel cartographique partagé entre ledit dispositif point d'accès sans fil (14) et ledit serveur distant (1200).

6. Procédé de sélection d'un canal de communication sans-fil selon l'une des revendications précédentes dans lequel au moins un canal de ladite bande fréquentielle est défini comme étant attribuable prioritairement pour une application autre que des communications sans fil, notamment pour opérer une détection au moyen d'un équipement radar.

7. Procédé de sélection d'un canal de communication sans-fil selon l'une des revendications précédentes comprenant, au moins une étape de collecte d'informations représentatives d'environnements autour d'une pluralité de dispositifs points d'accès sans fil comprenant ledit dispositif point d'accès sans fil et la transmission de ces informations vers le serveur central (1200).

8. Procédé de sélection d'un canal de communication sans-fil selon la revendication précédente comprenant une pluralité d'étapes de collecte d'informations représentatives d'environnements autour d'une pluralité de dispositifs points d'accès sans fil comprenant ledit dispositif point d'accès sans fil (14), au moins une partie desdites étapes de collecte étant antérieure à ladite étape de sélection et une partie des étapes de collecte étant postérieure à ladite étape de sélection.

9. Dispositif point d'accès sans fil (14) d'un réseau de communication (1), ledit dispositif (14) point d'accès sans fil comprenant des circuits électroniques et/ou radioélectriques configurés pour :

   - obtenir localement (S2), à partir dudit dispositif point d'accès sans fil (14), au moins une première information, représentative d'un premier environnement électromagnétique à portée dudit dispositif point d'accès sans-fil, et,
   - en l'absence de détection d'un signal radar pour ledit canal, obtenir localement une information représentative d'un changement de statut d'occupation pour ledit canal, au sens de la détection d'un radar, puis,
   - obtenir (S3), depuis un serveur distant (1200), au moins une seconde information, représentative d'un second environnement électromagnétique autour dudit dispositif point d'accès sans fil,
   - sélectionner (S4) ledit canal de communication grâce à au moins ladite première information représentative dudit premier environnement, ladite information représentative dudit changement de statut d'occupation, et ladite au moins une seconde information représentative dudit second environnement,
   - configurer (S5) une interface radio dudit dispositif point d'accès sans fil (14) pour opérer des communications sans fil avec ladite station dans le canal sélectionné.

10. Système dans un réseau de communication (1) comprenant un dispositif point d'accès sans fil selon la revendication 9 et un serveur (1200) comprenant des circuits électroniques et/ou radioélectriques configurés pour :

   - recevoir depuis au moins un dispositif point d'accès sans fil (14) connecté au réseau de communication (1) des informations représentatives d'un ou plusieurs environnements autour d'un ou plusieurs dispositifs points d'accès sans fil comprenant ledit dispositif point d'accès sans fil (14),
   - envoyer, éventuellement en réponse à une requête, audit dispositif point d'accès sans fil (14), au moins une information représentative d'un environnement électromagnétique autour dudit dispositif point d'accès sans fil (14).

11. Produit programme d'ordinateur **caractérisé en ce qu'**il comprend des instructions de codes de programme pour exécuter les étapes du procédé selon l'une quelconque des revendications 1 à 8, lorsque ledit programme est exécuté par un processeur.

12. Support de stockage d'informations comprenant un produit programme d'ordinateur selon la revendication précédente.

**Patentansprüche**

1. Verfahren zur Auswahl eines drahtlosen Kommunikationskanals zwischen einer drahtlosen Zugangspunktvorrichtung (14) eines Kommunikationsnetzwerks (1) und einer Station (1411), wobei das Verfahren in der drahtlosen Zugangspunktvorrichtung (14) des Kommunikationsnetzwerks (1) ausgeführt wird, wobei das Verfahren enthält:

   - ausgehend von der drahtlosen Zugangspunktvorrichtung lokal mindestens eine erste Information zu erhalten (S2), die für eine erste elektromagnetische Umgebung in Reichweite der drahtlosen Zugangspunktvorrichtung repräsentativ ist, und
   - in Abwesenheit der Erkennung eines Radarsignals für den Kanal eine für eine Besetztstatus-Änderung für den Kanal im Sinne der Erkennung eines Radars repräsentative Information lokal zu erhalten, dann
   - ausgehend von einem Remote-Server (1200) mindestens eine zweite Information zu erhalten (S3), die für eine zweite elektromagnetische Umgebung um den drahtlosen Zugangspunktvorrichtung herum repräsentativ ist, dann
   - den Kommunikationskanal dank mindestens der für die erste Umgebung repräsentativen ersten Information, der für die Besetztstatus-Änderung repräsentativen Information und der mindestens einen für die zweite Umgebung repräsentativen zweiten Information auszuwählen (S4), und
   - eine Funkschnittstelle der drahtlosen Zugangspunktvorrichtung (14) zu konfigurieren (S5), um drahtlose Kommunikationen mit der Station im ausgewählten Kanal vorzunehmen.

2. Auswahlverfahren eines drahtlosen Kommunikationskanals nach dem vorhergehenden Anspruch, wobei die erste Information für ein Frequenzband repräsentativ ist und die zweite Information für mindestens ein Verfügbarkeitsniveau eines drahtlosen Kommunikationskanals in dem Frequenzband repräsentativ ist.

3. Auswahlverfahren eines drahtlosen Kommunikationskanals nach einem der Ansprüche 1 und 2, wobei die zweite Information in einer Liste von Informationen enthalten ist, die sich auf verschiedene Kanäle beziehen und die je für mindestens ein Verfügbarkeitsniveau eines drahtlosen Kommunikationskanals unter mehreren drahtlosen Kommunikationskanälen im Frequenzband repräsentativ sind.

4. Auswahlverfahren eines drahtlosen Kommunikationskanals nach einem der vorhergehenden Ansprüche, wobei der Erhalt der zweiten Information vom Remote-Server nach dem Senden einer Anforderung von der drahtlosen Zugangspunktvorrichtung zum Remote-Server (1200) vorgenommen wird, die mit dem Ziel gesendet wird, mindestens die zweite Information zu erhalten.

5. Auswahlverfahren eines drahtlosen Kommunikationskanals nach einem der vorhergehenden Ansprüche, wobei die zweite Umgebung in Bezug auf eine oder mehrere Lokalisierungsinformationen der drahtlosen Zugangspunktvorrichtung (14) in einem kartographischen Bezugssystem definiert wird, das von der drahtlosen Zugangspunktvorrichtung (14) und dem Remote-Server (1200) gemeinsam genutzt wird.

6. Auswahlverfahren eines drahtlosen Kommunikationskanals nach einem der vorhergehenden Ansprüche, wobei mindestens ein Kanal des Frequenzbands als prioritär für eine andere Anwendung als drahtlose Kommunikationen zuweisbar definiert ist, insbesondere, um eine Erkennung mittels einer Radarausrüstung vorzunehmen.

7. Auswahlverfahren eines drahtlosen Kommunikationskanals nach einem der vorhergehenden Ansprüche, das mindestens einen Schritt des Sammelns von für Umgebungen um eine die drahtlose Zugangspunktvorrichtung enthaltende Vielzahl von drahtlosen Zugangspunktvorrichtungen herum repräsentativen Informationen und die Übertragung dieser Informationen an den zentralen Server (1200) enthält.

8. Auswahlverfahren eines drahtlosen Kommunikationskanals nach dem vorhergehenden Anspruch, das eine Vielzahl von Sammelschritten von für Umgebungen um eine die drahtlose Zugangspunktvorrichtung (14) enthaltende Vielzahl von drahtlosen Zugangspunktvorrichtungen herum repräsentativen Informationen enthält, wobei mindestens ein Teil der Sammelschritte vor dem Auswahlschritt und ein Teil der Sammelschritte nach dem Auswahlschritt liegt.

9. Drahtlose Zugangspunktvorrichtung (14) eines Kommunikationsnetzwerks (1), wobei die drahtlose Zugangspunktvorrichtung (14) Elektronik- und/oder Funkschaltkreise enthält, die konfiguriert sind:

- lokal ausgehend von der drahtlosen Zugangspunktvorrichtung (14) mindestens eine erste Information zu erhalten (S2), die für eine erste elektromagnetische Umgebung in Reichweite der drahtlosen Zugangspunktvorrichtung repräsentativ ist, und
- in Abwesenheit einer Erkennung eines Radarsignals für den Kanal lokal eine Information zu erhalten, die für eine Änderung des Besetztstatus für den Kanal im Sinne der Erkennung eines Radars repräsentativ ist, dann
- von einem Remote-Server (1200) mindestens eine zweite Information zu erhalten (S3), die für eine zweite elektromagnetische Umgebung um die drahtlose Zugangspunktvorrichtung herum repräsentativ ist,
- den Kommunikationskanal dank mindestens der für die erste Umgebung repräsentativen ersten Information, der für die Änderung des Besetztstatus repräsentativen Information und der mindestens einen für die zweite Umgebung repräsentativen zweiten Information auszuwählen (S4),
- eine Funkschnittstelle der drahtlosen Zugangspunktvorrichtung (14) zu konfigurieren (S5), um drahtlose Kommunikationen mit der Station im ausgewählten Kanal vorzunehmen.

10. System in einem Kommunikationsnetzwerk (1), das eine drahtlose Zugangspunktvorrichtung nach Anspruch 9 und einen Server (1200) enthält, der Elektronik- und/oder Funkschaltkreise enthält, die konfiguriert sind, um:

- von mindestens einer mit dem Kommunikationsnetzwerk (1) verbundenen drahtlosen Zugangspunktvorrichtung (14) für eine oder mehrere Umgebungen um eine oder mehrere die drahtlose Zugangspunktvorrichtung (14) enthaltende drahtlose Zugangspunktvorrichtungen herum repräsentative Informationen zu empfangen,
- ggf. als Antwort auf eine Anforderung an die drahtlose Zugangspunktvorrichtung (14) mindestens eine für eine elektromagnetische Umgebung um die drahtlose Zugangspunktvorrichtung (14) herum repräsentative Information zu senden.

11. Computerprogrammprodukt, **dadurch gekennzeichnet, dass** es Programmcodeanweisungen enthält, um die Schritte des Verfahrens nach einem der Ansprüche 1 bis 8 auszuführen, wenn das Programm von einem Prozessor ausgeführt wird.

12. Informationsspeicherträger, der ein Computerprogrammprodukt nach dem vorhergehenden Anspruch enthält.

**Claims**

1. Method for selecting a wireless communication channel between a wireless access point device (14) of a communication network (1) and a station (1411), the method being executed in the wireless access point device (14) of said communication network (1), the method comprising:

    - locally obtaining (S2), from said wireless access point device, at least a first information item, representing a first electromagnetic environment within range of said wireless access point device, and,
    - if no radar signal is detected for said channel, locally obtaining an information item representing a change in occupancy status for said channel, in the sense of the detection of a radar, then
    - obtaining (S3), from a remote server (1200), at least a second information item, representing a second electromagnetic environment around said wireless access point device, then
    - selecting (S4) said communication channel by virtue of at least said first information item representing said first environment, said information item representing said change in occupancy status, and said at least one second information item representing said second environment, and
    - configuring (S5) a radio interface of said wireless access point device (14) to implement wireless communications with said station in the selected channel.

2. Method for selecting a wireless communication channel according to the preceding claim, wherein said first information item represents a frequency band and the second information item represents at least one level of availability of a wireless communication channel in said frequency band.

3. Method for selecting a wireless communication channel according to either of Claims 1 and 2, wherein said second information item is included in a list of information relating to various channels and each representing at least one level of availability of a wireless communication channel from among a plurality of wireless communication channels in said frequency band.

4. Method for selecting a wireless communication channel according to one of the preceding claims, wherein obtaining said second information item from said remote server occurs following the transmission, by said wireless access point device, to said remote server (1200), of a request issued in order to obtain at least said second information item.

5. Method for selecting a wireless communication channel according to one of the preceding claims, wherein said second environment is defined with reference to one or more location information items of said wireless access point device (14) in a mapped data repository shared between said wireless access point device (14) and said remote server (1200).

6. Method for selecting a wireless communication channel according to one of the preceding claims, wherein at least one channel of said frequency band is defined as being primarily assignable for an application other than wireless communications, in particular for implementing detection by means of radar equipment.

7. Method for selecting a wireless communication channel according to one of the preceding claims, comprising at least one step of gathering information representing environments around a plurality of wireless access point devices comprising said wireless access point device and transmitting this information to the central server (1200).

8. Method for selecting a wireless communication channel according to the preceding claim, comprising a plurality of steps of gathering information representing environments around a plurality of wireless access point devices comprising said wireless access point device (14), at least some of said gathering steps being prior to said selecting step and some of the gathering steps being subsequent to said selecting step.

9. Wireless access point device (14) of a communication network (1), said wireless access point device (14) comprising electronic and/or radio circuits configured for:

    - locally obtaining (S2), from said wireless access point device (14), at least a first information item, representing a first electromagnetic environment within range of said wireless access point device, and,
    - if no radar signal is detected for said channel, locally obtaining an information item representing a change in occupancy status for said channel, in the sense of the detection of a radar, then
    - obtaining (S3), from a remote server (1200), at least a second information item, representing a second electromagnetic environment around said wireless access point device,
    - selecting (S4) said communication channel by virtue of at least said first information item representing said first environment, said information item representing said change in occupancy status, and said at least one second information item representing said second environment,
- configuring (S5) a radio interface of said wireless access point device (14) to implement wireless communications with said station in the selected channel.

10. System in a communication network (1) comprising a wireless access point device according to Claim 9 and a server (1200) comprising electronic and/or radio circuits configured for:

- receiving, from at least one wireless access point device (14) connected to the communication network (1), information representing one or more environments around one or more wireless access point devices comprising said wireless access point device (14),
- sending, optionally in response to a request, to said wireless access point device (14), at least one information item representing an electromagnetic environment around said wireless access point device (14).

11. Computer program product, **characterized in that** it comprises program code instructions for executing the steps of the method according to any one of Claims 1 to 8, when said program is executed by a processor.

12. Information storage medium comprising a computer program product according to the preceding claim.

Fig. 1

S0

INIT.

obtenir, localement, au moins une première information représentative d'un premier environnement électromagnétique autour du point d'accès sans fil

S2

obtenir, depuis un serveur distant, au moins une seconde information représentative d'un second environnement électromagnétique autour du point d'accès sans fil

S3

sélectionner un canal DFS disponible grâce à la première information et à la deuxième information

S4

configurer le point d'accès sans fil pour opérer des communications dans le canal DFS sélectionné

S5

Fig. 2

14

1431    1432    1433

| PROC | RAM | ROM |

1400

1434    1435

| STCK | COM |

Fig. 3

1200

1231    1232    1233

| PROC | RAM | ROM |
|------|-----|-----|

1230

| STCK | COM |
|------|-----|

1234    1235

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20200296659 A
- US 20140038655 A
- WO 2012003566 A